# EUROPEAN PATENT APPLICATION

(11) **EP 4 697 394 A1**
(43) Date of publication of application: **18.02.2026**
(21) Application number: 24894458.9
(22) Date of filing: 05.11.2024
(51) Int. Cl.: H01M 4/13, H01M 4/62, H01M 10/0562, H01M 10/052, H01M 4/02

(54) **CATHODE AND ALL-SOLID-STATE BATTERY COMPRISING SAME**

(30) Priority: 21.11.2023 KR 20230162162
(71) Applicant: LG Energy Solution, Ltd., Seoul 07335 (KR)
(72) Inventor: LEE, Choonghyeon, Daejeon 34122 (KR); KANG, Sora, Daejeon 34122 (KR); KWON, Hyejin, Daejeon 34122 (KR); KIM, Myeongsoo, Daejeon 34122 (KR); SONG, Min Sang, Daejeon 34122 (KR); OH, Kyungbae, Daejeon 34122 (KR); CHOI, Seokin, Daejeon 34122 (KR)
(74) Representative: Goddar, Heinz J.
(86) International application number: PCT/KR2024/017273
(87) International publication number: WO 2025/110564

(57) **Abstract**

The present invention relates to a cathode comprising a cathode active material layer and an all-solid-state battery comprising same, the cathode active material layer comprising a cathode active material, a sulfide-based solid electrolyte, a conductive material composite, and a fibrillized binder, wherein the conductive material composite includes: a core part containing a carbon-based conductive material; and a coating part disposed on at least a portion of the core part and containing polymer nanoparticles, the polymer nanoparticles being composed of a copolymer of polyvinylidene fluoride (PVDF) and a comonomer, the comonomer being at least one selected from the group consisting of hexafluoropropylene (HFP), chlorotrifluoroethylene (CTFE), hexafluoroacetone (HFA), 1-hydroperfluoropropylene (HPFP), tetrafluoroethylene (TFE), and trifluoroethylene (TrFE). According to the present invention, a cathode and an all-solid-state battery comprising same can be provided wherein the cathode has excellent ionic/electrical conductivity and charge and discharge performance as well as superb mechanical properties, such as tensile strength.

## Description

### Technical Field

This application claims the benefit of priority on the basis of Korean Patent Application No. 2023-0162162, filed on November 21, 2023, and the entire contents disclosed in the Korean Patent Application are incorporated herein as a part of the specification. The present disclosure relates to a positive electrode and an all-solid-state battery including the same.

### Background Art

The customer demand for secondary batteries with high energy density and high stability is rapidly increasing. In response to the demand, technology development for various all-solid-state battery electrodes is continuing, and among them, interest is growing in sulfide-based all-solid-state batteries that have high ionic conductivity and may theoretically achieve high energy density.

Since lithium ion conduction by a liquid electrolyte is not performed in the sulfide-based all-solid-state battery system like the existing lithium ion battery system, lithium ion conductivity is improved by adding a sulfide-based solid electrolyte with high ionic conductivity during manufacturing an electrode.

In this case, as the charge and discharge of the all-solid-state battery is repeated, the volume of the positive electrode active material expands and contracts, and the contact interface between the positive electrode active material and the sulfide-based solid electrolyte continuously collapses. To solve the defect, the introduction of a polymer binder with excellent binding properties while suppressing the side reaction of the sulfide-based solid electrolyte is needed. However, since the polymer binder has low electrical conductivity, the content of the polymer binder in the electrode is continuously reduced to improve performance.

### Disclosure of Invention

### Technical Goals

The present disclosure is for solving the above defects and for providing a positive electrode having excellent ionic/electrical conductivity and charge and discharge performance, as well as excellent mechanical properties such as tensile strength, and an all-solid-state battery including the same.

### Technical solutions

An aspect of the present disclosure relates to a positive electrode including a positive electrode active material layer. The positive electrode active material layer includes a positive electrode active material, a sulfide-based solid electrolyte, a conductive composite material and a fiberizing binder. The conductive composite material includes a core part including a carbon-based conductive material and a coating part positioned on at least a portion of the core part and including polymer nanoparticles. The polymer nanoparticles are a copolymer of polyvinylidene fluoride (PVDF) and a comonomer, where the comonomer is one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE).

In an embodiment, the fiberizing binder may be polytetrafluoroethylene (PTFE).

In an embodiment, 1.2 parts by weight or less of the fiberizing binder may be included based on 100 parts by weight of the positive electrode active material layer.

In an embodiment, a weight ratio of the polymer nanoparticles to the conductive composite material may be 5 to 50 percent by weight (wt%).

In an embodiment, the polymer nanoparticles may have a polymerization ratio between the polyvinylidene fluoride (PVDF) and the comonomer of 99:1 to 75:25.

In an embodiment, the carbon-based conductive material may be one or more selected from the group consisting of graphite, carbon black and carbon fiber.

In an embodiment, a Brunauer, Emmett and Teller (BET) specific surface area of the carbon-based conductive material may be 10 square meters per gram (m²/g) or less.

In an embodiment, an average length of the carbon-based conductive material may be 5 to 20 micrometers (µm)..

In an embodiment, the sulfide-based solid electrolyte may be one or more selected from the group including Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one among P, Si, Ge, B, Al, Ga and In), Li₂S-SiS₂-P₂S₃-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn or Ga), Lᵢ₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

In an embodiment, the positive electrode may be a dry positive electrode.

Another aspect of the present disclosure relates to an all-solid-state battery including a positive electrode, a solid electrolyte layer and a negative electrode. The positive electrode includes a positive electrode active material layer. The positive electrode active material layer includes a positive electrode active material, a sulfide-based solid electrolyte, a conductive composite material and a fiberizing binder. The conductive composite material includes a core part including a carbon-based conductive material and a coating part positioned on at least a portion of the core part and including polymer nanoparticles. The polymer nanoparticles are a copolymer of polyvinylidene fluoride (PVDF) and a comonomer, where the comonomer is one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE).

In an embodiment, the solid electrolyte layer may include one or more selected from the group including a sulfide-based solid electrolyte, an oxide-based solid electrolyte, and a halide-based solid electrolyte.

### Effects

According to the present disclosure, provided may be a positive electrode having excellent ionic/electrical conductivity and charge and discharge performance, as well as excellent mechanical properties such as tensile strength, and an all-solid-state battery including the same.

### Best Mode for Carrying Out the Invention

Terms or words used in this specification and claims should not be construed as limited to their common or dictionary meanings, and it should be interpreted as meaning and concept consistent with the technical idea of the present disclosure based on the principle that the inventor may appropriately define the concept of terms in order to explain his or her invention in the best way.

Therefore, it is understood that the configuration of an embodiment described in this specification is one of the most desired embodiments of the present disclosure and does not represent the entire technical idea of the present disclosure, so various equivalents and modification examples that can replace the embodiments at the time of filing the present application may exist.

In this specification, singular expressions include plural expressions unless the context clearly indicates otherwise.

In this specification, if a part "includes" a certain element, it means that the part may further include other elements rather than excluding other elements, unless specifically stated to the contrary. Accordingly, for example, a composition including compound A may include compounds other than A. However, in certain embodiments, the term "including" also encompasses more limited meanings of "consisting essentially/inherently of" and "consisting of," and for example, "a composition including compound A" may also consist (essentially/inherently) of compound A.

In connection with this, as used in this specification, it should be understood that terms such as "being provided with" or "having" are intended to designate the presence of implemented features, numbers, operations, components, or combinations thereof, but not exclude in advance the possibility of the presence or addition of one or more other features, numbers, operations, components, or combinations thereof.

In this specification, if an arbitrary member is located "on" or "between" another arbitrary member(s), not only a case where such member is in contact with another member, but also a case where another member or substance exists between the two members are included.

If amounts, concentrations, or other values or parameters are given as listings of ranges, desirable ranges, desirable upper limits and desirable lower limits in this specification, it is to be understood that all ranges that may be formed from any pair of any upper range limits or desirable values and any lower range limits or desirable values, are specifically disclosed, regardless of whether the range is separately disclosed. If a range of numeric values is referred to in this specification, unless otherwise stated, for example, unless there is a limited term such as greater than and less than, the range is intended to include the endpoint values and all integers and fractions within the range. The scope of the present disclosure is not intended to be limited to the specific values referred to when defining a range.

Among the physical properties referred to in this specification, in cases where the measurement temperature affects the relevant physical properties, unless otherwise specified, the physical properties are measured at room temperature. The term room temperature is a natural temperature that is not heated or reduced, and may mean, for example, any temperature in a range of about 10 degrees Celsius (°C) to 30°C, about 23°C, or about 25°C. Additionally, unless otherwise specified, the unit of the temperature in this specification is °C.

In addition, among the physical properties referred to in this specification, in cases where the measurement pressure affects the relevant physical properties, unless otherwise specified, the physical properties are measured at normal pressure, that is, atmospheric pressure (about 1 atm).

In this specification, an "all-solid-state battery" may mean an all-solid-state secondary battery, and may also be referred to as a cell, a secondary battery, or a battery.

In this specification, if at least one of a positive electrode, a solid electrolyte layer, and/or a negative electrode includes a sulfide-based solid electrolyte, it may be referred to as a "sulfide-based all-solid-state battery."

An aspect of the present disclosure relates to a positive electrode.

The present disclosure may relate to a positive electrode including a positive electrode active material layer. The positive electrode active material layer includes a positive electrode active material, a sulfide-based solid electrolyte, a conductive composite material, and a fiberizing binder, the conductive composite material includes a core part including a carbon-based conductive material, and a coating part positioned on at least a portion of the core part and including polymer nanoparticles, and the polymer nanoparticles are a copolymer of polyvinylidene fluoride (PVDF) and a comonomer, where the comonomer is one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE).

The fiberizing binder may be characterized as, for example, polytetrafluoroethylene (PTFE). The PTFE has two phase transition temperatures at 19°C and 30°C, and if a stress is applied between polymer powders at 19°C or higher, fiberization characteristics are expressed to uniformly bind other electrode elements. In this way, PTFE has unique fiberization characteristics and so may bind electrode materials in a uniform form in a solvent-free system. In this specification, the "solvent-free system" may mean, for example, a system in which materials such as an active material, an electrolyte, a conductive material, and/or a binder are mixed without a solvent during preparing an electrode slurry.

The positive electrode of the present disclosure may control side reactions such as hydrogen sulfide gas generation due to the high moisture sensitivity of the sulfide-based solid electrolyte by including the fiberizing binder above in the positive electrode active material layer, while taking merits of the characteristics such as high ionic conductivity and soft physical properties of a sulfide-based solid electrolyte, which enable room temperature processing.

The positive electrode of the present disclosure may be characterized by including, for example, 1.2 parts by weight or less of the fiberizing binder relative to 100 parts by weight of the positive electrode active material layer. In another embodiment, the positive electrode of the present disclosure may be characterized by including 1.15 parts by weight or less, 1.1 parts by weight or less, 1.05 parts by weight or less, or 1 part by weight or less, or 0.1 parts by weight or more, 0.3 parts by weight or more, 0.5 parts by weight or more, 0.7 parts by weight or more, or 0.9 parts by weight or more of the fiberizing binder relative to 100 parts by weight of the positive electrode active material layer. As the binder content in the positive electrode active material layer increases, binding characteristics improve, but conductivity decreases, which may result in a decrease in the performance of a battery. In other words, the tensile strength and conductivity of the positive electrode active material layer have been known to be in a trade-off relationship. However, the present disclosure has confirmed that excellent tensile strength and conductivity may be achieved while reducing the binder content in the positive electrode active material layer by introducing a conductive composite material, or the like.

The conductive composite material may include, for example, a core part including a carbon-based conductive material and a coating part positioned on at least a portion of the core part and including polymer nanoparticles. In this specification, "the coating part is positioned on at least a portion of the core part" may mean, for example, that the coating part covers 10 percent (%) or more, 20% or more, 30% or more, 40% or more, 50% or more, 60% or more, 70% or more, 80% or more, 90% or more, 95% or more, or 100%, or that the coating part covers 95% or less, 90% or less, 80% or less, 70% or less, 60% or less, 50% or less, 40% or less, 30% or less, 20% or less, or 10% or less of the surface of the core part. In this specification, "the coating part covers the surface of the core part" may mean that the coating part is formed on the core part with a thickness of at least 100 nanometers (nm) or more. The core part may contain, for example, 70 percent by weight (wt%) or more, 80 wt% or more, 90 wt% or more, 95 wt% or more, or 100 wt% of the carbon-based conductive material. The coating part may contain, for example, 70 wt% or more, 80 wt% or more, 90 wt% or more, 95 wt% or more, or 100 wt% of the polymer nanoparticles.

The polymer nanoparticles may be, for example, a copolymer of polyvinylidene fluoride (PVDF) and a comonomer, and the comonomer may be characterized by being one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE). The positive electrode of the present disclosure may have excellent conductivity by including the copolymer of the polyvinylidene fluoride (PVDF) and the comonomer above in the positive electrode active material layer. In addition, the comonomer may be used without limitation as long as it is one or more of the examples described above, but in terms of increasing the elongation of the positive electrode active material layer and securing ease of processing through this, hexafluoropropylene (HFP) may be desirable.

The weight ratio of the polymer nanoparticles to the conductive composite material may be, for example, 5 to 50 wt%. In another embodiment, the weight ratio of the polymer nanoparticles to the conductive composite material may be 10 wt% or more, or 15 wt% or more, or 45 wt% or less, 40 wt% or less, 35 wt% or less, 30 wt% or less, or 25 wt% or less. The positive electrode of the present disclosure may have excellent mechanical properties even with a small binder content by including the conductive composite material having the above characteristics in the positive electrode active material layer, and may have improved ionic and/or electrical conductivity. The effect may be further improved by additionally controlling the characteristics of the polymer nanoparticles described below.

In the polymer nanoparticles, the polymerization ratio between the polyvinylidene fluoride (PVDF) and the comonomer may be, for example, in a range of 99:1 to 75:25, but is not limited thereto. In the polymer nanoparticles, the polymerization ratio between the polyvinylidene fluoride (PVDF) and the comonomer may be, in another embodiment, in a range of 97:3 to 80:20, or in a range of 95:5 to 85:15.

The carbon-based conductive material may be, for example, characterized by one or more selected from the group consisting of graphite; carbon black such as acetylene black, Ketjen black, channel black, furnace black, lamp black, and thermal black; and carbon fiber. In terms of reducing the formation of an interface with a sulfide-based solid electrolyte and controlling the decomposition phenomenon of the electrolyte during an electrochemical reaction, the carbon-based conductive material may be carbon fiber.

The Brunauer, Emmett and Teller (BET) specific surface area of the carbon-based conductive material may be characterized by being, for example, 10 square meters per gram (m²/g) or less. The BET specific surface area may be measured by a known method. The BET specific surface area of the carbon-based conductive material may be, in another embodiment, 9 m²/g or less, 8 m²/g or less, 7 m²/g or less, 6 m²/g or less, 5 m²/g or less, 4 m²/g or less, 3 m²/g or less, 2 m²/g or less, or 1 m²/g or less, or 0.1 m²/g or more, 0.5 m²/g or more, 1 m²/g or more, 2 m²/g or more, 3 m²/g or more, 4 m²/g or more, or 5 m²/g or more. By controlling the BET specific surface area of the carbon-based conductive material as described above, the decomposition phenomenon of the sulfide-based solid electrolyte may be controlled.

The average length of the carbon-based conductive material may be characterized as being, for example, 5 to 20 micrometers (µm). The average length of the carbon-based conductive material may be, in another embodiment, 7 µm or more, 9 µm or more, or 11 µm or more, or 19 µm or less, 18 µm or less, 17 µm or less, 16 µm or less, 15 µm or less, 14 µm or less, or 13 µm or less. By controlling the average length of the carbon-based conductive material included in the core part of the conductive composite material as described above, a conductive path between the positive electrode active materials within the positive electrode active material layer may be sufficiently secured to improve electrical conductivity while also improving dispersibility.

The positive electrode of the present disclosure may be characterized in that, for example, the weight ratio of the conductive composite material to the fiberizing binder is 0.01 to 100. In another embodiment, the positive electrode of the present disclosure may have a weight ratio of the conductive composite material to the fiberizing binder of 0.05 or more, 0.1 or more, 0.5 or more, 5 or more, 10 or more, or 50 or more, or 90 or less, 50 or less, 10 or less, 5 or less, 0.5 or less, 0.1 or less, or 0.05 or less.

The sulfide-based solid electrolyte may be characterized by one or more selected from the group including, for example, Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one among P, Si, Ge, B, Al, Ga, and In), Li₂S-SiS₂-P₂S₅-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn or Ga), Lᵢ₂S-GeS₂,Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2).

The sulfide-based solid electrolyte may be prepared by treating starting materials such as Li₂S and P₂S₅ by a melting rapid cooling method or a mechanical milling method. In addition, heat treatment may be performed after the treatment. The solid electrolyte may be amorphous, crystalline, or a mixed state thereof. In the present disclosure, the sulfide-based solid electrolyte may include, for example, sulfur (S), phosphorus (P), and lithium (Li) as at least constituent elements among the above-mentioned sulfide-based solid electrolyte materials.

The sulfide-based solid electrolyte may be, for example, an argyrodite-type compound including one or more selected from Li₇₋ₓPS₆₋ₓClₓ (0≤x≤2), Li₇₋ₓPS₆₋ₓBrₓ (0≤x≤2), and Li₇₋ₓPS₆₋ₓIₓ (0≤x≤2). In particular, the sulfide-based solid electrolyte may be an argyrodite-type compound including one or more selected from Li₆PS₅Cl, Li₆PS₅Br and Li₆PS₅I.

The density of the argyrodite-type solid electrolyte may be, for example, 1.5 to 2.5 grams per cubic centimeter (g/cc). Since the argyrodite-type solid electrolyte has a density of 1.5 g/cc or more, the internal resistance of the all-solid-state secondary battery may be reduced, and penetration of the solid electrolyte by Li may be effectively suppressed.

The elastic modulus of the sulfide-based solid electrolyte may be, for example, 15 to 45 gigapascals (GPa).

The positive electrode of the present disclosure may be characterized by, for example, that the weight ratio of the sulfide-based solid electrolyte to the conductive composite material is 0.01 to 100. In another embodiment, the positive electrode of the present disclosure may have the weight ratio of the sulfide-based solid electrolyte to the conductive composite material of 0.05 or more, 0.1 or more, 0.5 or more, 5 or more, 10 or more, or 50 or more, or 90 or less, 50 or less, 10 or less, 5 or less, 0.5 or less, 0.1 or less, or 0.05 or less.

The positive electrode of the present disclosure may be characterized by, for example, being a dry positive electrode. In this specification, a "dry positive electrode" is a positive electrode manufactured without using a solvent, and the dry positive electrode may contain 1 wt% or less, 0.1 wt% or less, 0.001 wt% or less of a solvent, or may not contain a solvent at all.

The positive electrode of the present disclosure may further contain, for example, other conductive materials other than the conductive composite material in the positive electrode active material layer. The other conductive materials may be different from the conductive composite material, and in particular, may be different in not including the coating part described above or not including the polymer nanoparticles having the characteristics described above in the coating part. The other conductive materials may be, for example, graphite, carbon black, acetylene black, Ketjen black, carbon fibers, carbon nanotubes, or metal powders, but are not limited thereto, and any conductive material that may be introduced into the positive electrode active material layer may be used without limitation as long as it does not inhibit the purpose of the present disclosure.

The positive electrode active material reversibly intercalates and deintercalates lithium ions. The positive electrode active material may be, but is not limited to, lithium transition metal oxides such as lithium cobalt oxide (LCO), lithium nickel oxide, lithium nickel cobalt oxide, lithium nickel cobalt aluminum oxide (NCA), lithium nickel cobalt manganese oxide (NCM), lithium manganate, and lithium iron phosphate, nickel sulfide, copper sulfide, lithium sulfide, iron oxide, or vanadium oxide, and any one used in the art may be used as positive electrode active materials. The positive electrode active materials may be used alone or as a mixture of two or more.

The lithium transition metal oxide may be, for example, a compound represented by any one among the formulas of LiₐA_{1-b}B_{b}D₂ (where 0.90≤a≤1 and 0≤b≤0.5); LiₐNi_{1-b-c}Co_{b}B_{c}O_{2-α}F₂ (where 0.90≤a≤1, 0≤b≤0.5, 0≤c≤0.05 and 0<α<2); LiₐNi_{1-b-c}Mn_{b}B_{c}D_{α} (where 0.90≤a≤1, 0≤b≤0.5, 0≤c≤0.05 and 0≤α≤2); LiₐNi_{1-b-c}Co_{b}B_{c}D_{α} (where 0.90≤a≤1, 0≤b≤0.5, 0≤c≤0.05 and 0<α≤2); LiₐE_{1-b}B_{b}O_{2-c}D_{c} (where 0.90≤a≤1, 0≤b≤0.5 and 0≤c≤0.05); LiE_{2-b}B_{b}O_{4-c}D_{c} (where 0≤b≤0.5 and 0≤c≤0.05); LiₐNi_{1-b-c}Co_{b}B_{c}O_{2-α}F_{α} (where 0.90≤a≤1, 0≤b≤0.5, 0≤c≤0.05 and 0<α<2); LiₐCoG_{b}O₂ (where 0.90≤a≤1 and 0.001≤b≤0.1); LiₐMnG_{b}O₂ (where 0.90≤a≤1 and 0.001≤b≤0.1); LiₐMn₂G_{b}O₄ (where 0.90≤a≤1 and 0.001≤b≤0.1); LiₐNi_{1-b-c}Mn_{b}B_{c}O_{2-α}F_{α} (where 0.90≤a≤1, 0≤b≤0.5, 0≤c≤0.05 and 0<α<2); LiₐNi_{1-b-c}Mn_{b}B_{c}O_{2-α}F₂ (where 0.90≤a≤1, 0≤b≤0.5, 0≤c≤0.05 and 0<α<2); LiₐNi_{b}E_{c}G_{d}O₂ (where 0.90≤a≤1, 0≤b≤0.9, 0≤c≤0.5 and 0.001≤d≤0.1); LiₐNi_{b}Co_{c}Mn_{d}GₑO₂ (where 0.90≤a≤1, 0≤b≤0.9, 0≤c≤0.5, 0≤d≤0.5 and 0.001≤e≤0.1); LiₐNiG_{b}O₂ (where 0.90≤a≤1 and 0.001≤b≤0.1.); QO₂; QS₂; LiQS₂; V₂O₅; LiV₂O₅; LiIO₂; LiNiVO₄; Li_{(3-f)}J₂(PO₄)₃ (0≤f≤2); Li_{(3-f)}Fe₂(PO₄)₃ (0≤f≤2); and LiFePO₄. In the compounds, A may be Ni, Co, Mn, or a combination thereof; B may be Al, Ni, Co, Mn, Cr, Fe, Mg, Sr, V, a rare earth element, or a combination thereof; D may be O, F, S, P, or a combination thereof; E may be Co, Mn, or a combination thereof; F may be F, S, P, or a combination thereof; G may be Al, Cr, Mn, Fe, Mg, La, Ce, Sr, V, or a combination thereof; Q may be Ti, Mo, Mn, or a combination thereof; I may be Cr, V, Fe, Sc, Y, or a combination thereof; and J may be V, Cr, Mn, Co, Ni, Cu, or a combination thereof. A compound having a coating layer added to the surface of the above-described compound may be used as the positive electrode active material, or a mixture of the above-described compound and the compound having a coating layer added thereto may be used. The coating layer added to the surface of the compound may contain, for example, a lithium ion conductive oxide. The lithium ion conductive oxide may include, but is not limited to, LiNbO₃, Li₄Ti₅O₁₂, Li₃PO₄ or the like. The compound forming the coating layer may be amorphous or crystalline. A method of forming a coating layer may consider, for example, a spray coating method, a dipping method or the like, but may be selected without limitation within a range that does not adversely affect the physical properties of the positive electrode active material.

If the positive electrode active material is, for example, a ternary lithium transition metal oxide including nickel (Ni) such as nickel cobalt and aluminum (NCA) and nickel cobalt and manganese (NCM), it may be possible to increase the capacity density of an all-solid-state battery and reduce the metal elution of the positive electrode active material in a charged state. Accordingly, the cycle characteristics of the all-solid-state battery in a charged state may be improved.

The shape of the positive electrode active material may be, for example, a particle shape such as a sphere or an elliptical sphere. The particle diameter of the positive electrode active material is not particularly limited, and may be within a range applicable to positive electrode active materials of general all-solid-state secondary batteries. The content of the positive electrode active material of the positive electrode is not particularly limited, and may be within a range applicable to positive electrodes of general all-solid-state secondary batteries.

In addition, the positive electrode active material layer may further include, for example, additives such as fillers, coating agents, dispersants, and ion conductive assistants, and the additives may be used without limitation as long as they are known materials generally used in electrodes of all-solid-state batteries.

The positive electrode of the present disclosure may further include, for example, a positive electrode current collector.

As the positive electrode current collector, a known metal that may be used as the current collector of an all-solid-state battery may be used. The positive electrode current collector may use, for example, a plate, a mesh, or a foil, composed of copper (Cu), nickel (Ni), aluminum (Al), vanadium (V), gold (Au), platinum (Pt), chromium (Cr), iron (Fe), zinc (Zn), indium (In), germanium (Ge), lithium (Li), magnesium (Mg), stainless steel, titanium (Ti), cobalt (Co), or an alloy thereof. The positive electrode current collector may be omitted in some cases.

The positive electrode of the present disclosure may have, for example, a ratio of tensile strength (megapascals (MPa)) to the content (wt%) of the fiberizing binder included in the positive electrode active material layer of 0.1 MPa/wt% or more. The tensile strength may be measured in a manner according to the evaluation example described later. The positive electrode of the present disclosure may have, in another embodiment, the ratio of tensile strength to the content of the fiberizing binder included in the positive electrode active material layer of 0.11 MPa/wt% or more, 0.12 MPa/wt% or more, or 0.13 MPa/wt% or more, and the upper limit is not particularly limited, but may be about 1 MPa/wt% or less or 0.5 MPa/wt% or less.

The positive electrode of the present disclosure may have, for example, the ratio of electrical conductivity (Siemens per centimeter (S/cm)) to the content (wt%) of the fiberizing binder included in the positive electrode active material layer of 3.5.E⁻⁰⁵ (S/cm)/wt% or more. The electrical conductivity may be measured in a manner according to the evaluation example described later. In another embodiment, the positive electrode of the present disclosure may have the ratio of electrical conductivity (S/cm) to the content (wt%) of the fiberizing binder included in the positive electrode active material layer of 4.E⁻⁰⁵ (S/cm)/wt% or more, 4.5.E⁻⁰⁵ (S/cm)/wt% or more, 5.E⁻⁰⁵ (S/cm)/wt% or more, 5.5.E⁻⁰⁵ (S/cm)/wt% or more, 6.E⁻⁰⁵ (S/cm)/wt% or more, or 6.5.E⁻⁰⁵ (S/cm)/wt% or more, and the upper limit is not particularly limited, but may be 20.E⁻⁰⁵ (S/cm)/wt% or less, 15.E⁻⁰⁵ (S/cm)/wt% or less, or 10.E⁻⁰⁵ (S/cm)/wt% or less.

The positive electrode of the present disclosure may have, for example, the ratio of ionic conductivity (S/cm) to the content (wt%) of the fiberizing binder included in the positive electrode active material layer of 2.5.E⁻⁰⁵ (S/cm)/wt% or more. The ionic conductivity may be measured by a method according to the evaluation example described later. In another embodiment, the positive electrode of the present disclosure may have the ratio of ionic conductivity (S/cm) to the content (wt%) of the fiberizing binder included in the positive electrode active material layer of 3.E⁻⁰⁵ (S/cm)/wt% or more, 3.5.E⁻⁰⁵ (S/cm)/wt% or more, 4.E⁻⁰⁵ (S/cm)/wt% or more, 4.5.E⁻⁰⁵ (S/cm)/wt% or more, or 5.E⁻⁰⁵ (S/cm)/wt% or more, and the upper limit is not particularly limited, but may be 20.E⁻⁰⁵ (S/cm)/wt% or less, 15.E⁻⁰⁵ (S/cm)/wt% or less, or 10.E⁻⁰⁵ (S/cm)/wt% or less.

Another aspect of the present disclosure relates to an all-solid-state battery.

The matters relating to the first aspect of the present disclosure may be equally applied to the matters relating to the second aspect unless specifically stated otherwise.

The present disclosure may relate to an all-solid-state battery including a positive electrode, a solid electrolyte layer, and a negative electrode, wherein the positive electrode includes a positive electrode active material layer, the positive electrode active material layer includes a positive electrode active material, a sulfide-based solid electrolyte, a conductive composite material, and a fiberizing binder, the conductive composite material includes a core part including a carbon-based conductive material and a coating part positioned on at least a portion of the core part and including polymer nanoparticles, and the polymer nanoparticles are a copolymer of polyvinylidene fluoride (PVDF) and a comonomer, where the comonomer is one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE).

The solid electrolyte layer may include, for example, but is not limited to, a sulfide-based solid electrolyte, an oxide-based solid electrolyte, or a halide-based solid electrolyte, and may be any electrolyte commonly used in an all-solid-state battery. The sulfide-based solid electrolyte included in the solid electrolyte layer may be, for example, one or more among the examples of the sulfide-based solid electrolyte included in the above-described positive electrode active material layer, and may be the same as or different from the sulfide-based solid electrolyte included in the positive electrode active material layer. The oxide-based solid electrolyte may be, for example, one or more among a garnet-type solid electrolyte, a Nasicon-type solid electrolyte, a LISICON-type solid electrolyte, and a perovskite-type solid electrolyte. Specifically, as the oxide-based solid electrolyte, Li₇La₃Zr₂O₁₂, Li₇La₃Zr₂O₁₂ doped with elements such as Al, Y, Ga, Ta, and Nb instead of Li, or Li₇La₃Zr₂O₁₂ multi-doped with Ga⁺³-Sc⁺³ instead of Li, and La, Zr element position, may be used; those whose surfaces are coated with materials such as Al₂CO₃, Ge, ZnO, or the like may be used; Na₁₊ₓZr₂Si₂P_{3-X}O₁₂ (0≤x≤3), LiM₂(PO₄)₃ (M=Zr, Ti, Ge), Li₁₊ₓAlₓM₂₋ₓ(PO₄)₃ (0<x<2, and M=Zr, Ti, Ge), or those doped with atoms having an oxidation number of +3 such as Y, La, and Sc instead of Al, or doped with atoms having an oxidation number of +2 such as Sr, Mg, and Ca, may be used; xLi₃AO₄₋(1-x)Li₄BO₄ (A: P, As, V, or the like, and B: Si, Ge, Ti, or the like) or those to which Li₃BO₃, or the like is added, may be used; or Li₃ₓLa_{2/3-x}□_{1/3-2x}TiO₃ (LLTO, 0<x<0.16, and □ is vacancy), La_{0.57-2x/3}SrₓLi_{0.3}TiO₃, or the like may be used, but are not limited thereto. As the halide-based solid electrolyte, Li₂ZrCl₆, Li₂₊ₓZr₁₋ₓMₓCl₆ (M=Fe, Cr, V), Na₂ZrCl₆, or the like may be used, but is not limited thereto.

The shape of the solid electrolyte may be, for example, a particle type. In addition, the average particle diameter (D50) of the solid electrolyte may be, for example, in a range of 0.5 to 4 µm. The solid electrolyte may be used alone, or two or more may be used. If the solid electrolyte layer includes two or more solid electrolytes, the two or more solid electrolytes may be mixed and used in one layer, or a separate layer including each solid electrolyte may be formed to form a multilayer structure, or the solid electrolytes may be mixed so that the mixing ratios may be the same or different to form separate layers to form a multilayer structure. In this specification, the average particle diameter (D50) may mean a diameter at which the cumulative volume of the particles is half (50%) of the total volume if the particle diameters of the particles are arranged in descending order as measured by laser diffraction scattering particle diameter distribution measurement.

The solid electrolyte layer may further contain, for example, a binder. The binder may be, for example, an aqueous binder, an organic binder, or a combination thereof. The binder may be, for example, polyvinyl alcohol, carboxymethyl cellulose, hydroxypropyl cellulose, diacetyl cellulose, polyvinylidene fluoride, polyvinyl chloride, carboxylated polyvinyl chloride, polyvinyl fluoride, a polymer containing ethylene oxide, polyvinyl pyrrolidone, polyurethane, polytetrafluoroethylene, polyvinylidene fluoride, polyethylene, polypropylene, styrene-butadiene rubber, acrylate styrene-butadiene rubber, an epoxy resin, nylon, or a combination thereof. The aqueous binder may include, for example, styrene butadiene rubber, carboxymethyl cellulose, or a combination thereof. The organic binder may include, for example, polytetrafluoroethylene, polyvinylidene fluoride, or a combination thereof, but is not limited thereto, and known binders may be used without limitation as long as they do not inhibit the purpose of the present disclosure. The above solid electrolyte layer may contain, for example, 5 wt% or less of a binder.

The thickness of the solid electrolyte layer is not particularly limited, but may typically be within a range of 0.1 µm to 1 millimeters (mm).

The all-solid-state battery of the present disclosure may include a negative electrode.

The negative electrode may include, in an embodiment, a negative electrode active material layer. The negative electrode active material layer may include, for example, a negative electrode active material, and may optionally further include a solid electrolyte, a conductive material, and/or a binder.

The negative electrode active material may be, for example, lithium, a lithium alloy, carbon, silicon, a silicon alloy, or Li₄Ti₅O₁₂ (LTO), or may be selected from alloys of the lithium, lithium alloy, carbon, silicon, a silicon alloy, or Li₄Ti₅O₁₂ (LTO), with at least one metal selected from the group consisting of Sn, Ge, and Al.

The solid electrolyte, conductive material, and/or binder may be one of the types included in the above-mentioned positive electrode or solid electrolyte layer, but is not limited thereto, and any one used as solid electrolytes, conductive materials, and/or binders in the relevant technical field may be possible. The solid electrolyte, conductive material and/or binder included in the negative electrode active material layer may be the same as or different from the solid electrolyte, conductive material and/or binder included in the positive electrode active material layer, the solid electrolyte layer, or the like.

The negative electrode active material layer may also further include, for example, other additives. The additives may be used without limitation as long as known materials generally used in electrodes of all-solid-state batteries.

The negative electrode may also further include a negative electrode current collector. The negative electrode current collector may be a known metal that may be used as a current collector of an all-solid-state battery. The negative electrode current collector may be, for example, a material that does not form an alloy or compound with lithium. As the negative electrode current collector, for example, a material selected from the group consisting of copper (Cu), nickel (Ni), aluminum (Al), vanadium (V), gold (Au), platinum (Pt), magnesium (Mg), iron (Fe), titanium (Ti), cobalt (Co), chromium (Cr), zinc (Zn), germanium (Ge), indium (In), and stainless steel may be used, but is not limited thereto, and any material used as an electrode current collector in the relevant technical field may be used as long as it does not inhibit the purpose of the present disclosure. The negative electrode current collector may be composed of one of the above-described metals, or may be composed of an alloy or a coating material of two or more metals. The negative electrode current collector may be, for example, in the form of a plate, mesh, or foil, but is not limited thereto.

In another embodiment, if the negative electrode uses lithium or a lithium alloy as the negative electrode active material, the negative electrode may include lithium or a lithium alloy as the negative electrode active material layer during the battery manufacturing process (from the initial manufacturing), or in the battery manufacturing process, a separate negative electrode active material layer may not be formed, but a lithium layer may be formed during a charging process.

If a separate negative electrode active material layer is not formed in the battery manufacturing process, the all-solid-state battery of the present disclosure may include an anodeless coating layer between the solid electrolyte layer and the negative electrode current collector, or, if there is no negative electrode current collector, on the surface of the anodeless coating layer opposite to the solid electrolyte layer.

In this specification, the "anodeless coating layer" means a coating layer formed between the negative current collector and the solid electrolyte layer, or on one side of the solid electrolyte layer in the case of not including a negative current collector, in an all-solid-state battery in which lithium is absorbed into the anodeless coating layer during charging, and after the charge capacity of the anodeless coating layer is exceeded, lithium is deposited between the negative current collector and the anodeless coating layer or, in the case of not including the negative current collector, on the surface of the anodeless coating layer opposite to the solid electrolyte layer among the surfaces of the anodeless coating layer, and during discharging, lithium of the anodeless coating layer and the lithium metal layer is ionized and moves toward the positive electrode, and may have a different configuration and operating mechanism from the aforementioned negative active material layer. The anodeless coating layer may act as a protective layer for the lithium metal layer by covering the lithium metal layer during the charging process and may suppress the precipitation and growth of lithium dendrites, thereby suppressing short-circuit and capacity reduction of the all-solid-state battery and improving performance, or the like.

The anodeless coating layer may include, for example, amorphous carbon. The amorphous carbon included in the anodeless coating layer may be independently, for example, one or more selected from the group consisting of carbon black, acetylene black, furnace black, Ketjen black, and graphene, but is not limited thereto, and any amorphous carbon that may be used in an anodeless all-solid-state battery may be used without limitation.

The anodeless coating layer may further include, for example, a lithium-friendly element that forms an alloy or compound with lithium. The lithium-friendly element may be, for example, one or more metals, metalloid elements, or a combination thereof selected from the group consisting of gold (Au), platinum (Pt), palladium (Pd), silicon (Si), silver (Ag), aluminum (Al), bismuth (Bi), tin (Sn), and zinc (Zn).

The particle diameter of the lithium-friendly element may be, for example, in the range of 10 to 1000 nm. The particle diameter may mean a maximum particle diameter, a minimum particle diameter, or an average particle diameter. The particle diameter of the lithium-friendly element may be, in another embodiment, 20 nm or more, 30 nm or more, or 40 nm or more, or 500 nm or less, 400 nm or less, 300 nm or less, 200 nm or less, or 100 nm or less.

The anodeless coating layer may also further include, for example, a binder. The binder may be selected from the binders mentioned as being included in the above-described positive electrode active material layer, solid electrolyte layer, negative electrode active material layer, or the like, or a known binder may be used without limitation.

The negative electrode may further optionally include, for example, a negative electrode current collector on one side of the anodeless coating layer, and the above-described negative electrode current collector may be used without limitation.

If the all-solid-state battery includes the anodeless coating layer, the all-solid-state battery may further include, for example, a thin film including an element capable of forming an alloy with lithium. The thin film may be included between the negative electrode current collector and the anodeless coating layer, or on at least one surface of both sides of the anodeless coating layer if there is no negative electrode current collector. The element capable of forming an alloy with lithium may be, for example, gold, silver, zinc, tin, indium, silicon, aluminum, bismuth, or the like, but is not limited thereto, and any element capable of forming an alloy with lithium in the relevant technical field may be used. The thin film may be composed of one of the above examples or may be composed of various types of alloys. Since the all-solid-state battery of the present disclosure further includes the thin film, the cycle characteristics of the all-solid-state battery may be further improved.

The thickness of the thin film may be, for example, 1 to 800 nm, 10 to 700 nm, 50 to 600 nm, or 100 to 500 nm. The thin film may be formed by, for example, a vacuum deposition method, a sputtering method, a plating method, or the like, but is not limited thereto, and any method capable of forming a thin film in the relevant technical field may be used.

If the anodeless coating layer is included, the all-solid-state battery may further include, by charging, a metal including lithium or a lithium alloy and/or a metal layer thereof, for example, between the negative electrode current collector and the anodeless coating layer, on the side of the anodeless coating layer opposite to the solid electrolyte layer, and/or within the anodeless coating layer. The lithium alloy may be, for example, a Li-Al alloy, a Li-Sn alloy, a Li-In alloy, a Li-Ag alloy, a Li-Au alloy, a Li-Zn alloy, a Li-Ge alloy, a Li-Si alloy, or the like, but is not limited thereto, and any one used as a lithium alloy in the relevant technical field may be used. The metal or metal layer included between the negative electrode current collector and the anodeless coating layer, and/or within the anodeless coating layer may be composed of one of the alloys or lithium, or may be composed of multiple types of alloys.

The thickness of the metal layer including lithium or lithium alloy may be, for example, in the range of 1 to 1000 µm, 1 to 500 µm, 1 to 200 µm, 1 to 150 µm, 1 to 100 µm, or 1 to 50 µm. The thickness needs to be controlled as described above so that the metal layer may perform a role as a lithium storage well and improve cycle characteristics.

The metal layer may be formed by precipitation between the negative electrode current collector and the anodeless coating layer, or on the surface of both sides of the anodeless coating layer opposite to the solid electrolyte layer, for example, by charging after assembling the all-solid-state battery. In the case where the metal layer is formed by charging after assembling the all-solid-state battery, the region between the negative current collector and the anodeless coating layer, or on the surface of both sides of the anodeless coating layer opposite to the solid electrolyte layer, may be, for example, a lithium-free region that does not include lithium in the initial state or the post-discharge state of the all-solid-state battery.

### Mode for Carrying Out the Invention

Hereinafter, the present disclosure will be explained in detail with reference to examples in order to specifically explain the disclosed contents of the present disclosure as described above and the intended actions and effects of the present disclosure. However, the examples may be modified into various other forms, and the scope of the present specification is not to be construed as being limited to the examples. It is emphasized that the examples represent the present disclosure and are provided to explain the present disclosure in more detail to those skilled in the art.

### Preparation Example.

After dispersing a polyvinylidene fluoride-hexafluoropropylene copolymer (PVDF-HFP) in an organic solvent at a certain weight ratio, the resultant was coated on carbon fiber (BET 10 m²/g or less, and average fiber length of 12 µm) using a spray coater. As a result, PVDF-HFP nanoparticles were coated on the surface of the carbon fiber, and a conductive composite material containing 20 parts by weight of the PVDF-HFP nanoparticles relative to 100 parts by weight of the conductive composite material was obtained.

### Example 1

Positive electrode active material: sulfide-based solid electrolyte: conductive material: binder were mixed in a weight ratio of 78:19.5:1.5:1 by powder mixing. Specifically, the positive electrode active material and the sulfide-based solid electrolyte were quantified in powder form, mixed for 15 minutes using an agate mortar with pestle in a dry room environment, then the conductive material was quantified and added to the mixture and mixed for an additional 15 minutes, and then the binder was quantified and added to the mixture and additionally mixed to obtain a mixed powder. The mixed powder was fiberized using a mortar with pestle and calendered using a roller to manufacture a positive electrode including a positive electrode active material layer at the level of 6 milliampere-hours per square centimeter (mAh/cm²).

In this case, LiNi_{0.8}Co_{0.1}Mn_{0.1}O₂ (NCM) was used as the positive electrode active material, Li₆PS₅Cl, which is an argyrodite type crystal, was used as the sulfide-based solid electrolyte, the conductive composite material prepared according to the Preparation Example was used as the conductive material, and PTFE (601X, Chemours) was used as the binder. The sum of the weights of the PVDF-HFP nanoparticles and the binder included in the conductive composite material was 1.3 parts by weight relative to 100 parts by weight of the mixed powder.

### Comparative Example 1

A positive electrode including a positive electrode active material layer having a level of 6 mAh/cm² was manufactured in the same manner as in the Example, except that carbon fibers (BET 10 m²/g or less, and average fiber length of 12 µm) were used instead of the conductive composite material of the Preparation Example as a conductive material, and the weight ratio of positive electrode active material: sulfide-based solid electrolyte: conductive material: binder was 78:19.5:1.2:1.3.

### Evaluation Example 1. Evaluation of Mixed Powder Properties

The powder flow stability of the mixed powders of Example 1 and Comparative Example 1 was evaluated using a powder rheology evaluation tool of a rheometer (Discovery HR-20, TA instruments). The powder rheology tool was installed on the corresponding rheometer installed in a dry room, and then the corresponding mixed powder was filled into a cup mounted on the rheology tool. After that, a powder flow test was conducted under room temperature and normal pressure conditions.

As a result, it was confirmed that the mixed powder of Example 1 had superior flow stability compared to the mixed powder of Comparative Example 1, as shown in Table 1 below. It is expected because the conductive composite material according to the present disclosure effectively binds the positive active material and the sulfide-based solid electrolyte.

**[Table 1]**

| Division | Confined stability index (%) | Unconfined stability index (%) |
|---|---|---|
| Example 1 | 86 | 87 |
| Comparative Example 1 | 81 | 81 |

(In this case, for each of the Example and Comparative Example, measurements were taken twice and the average value was used as the result value in Table 1 above.)

Here, the confined stability index (%) is the ratio of the flow energy measured in the direction of entering the cup if a blade mounted on the rheometer rotates at a constant speed in the cup containing the powder and moves up and down, which means the ratio of the energy value at the last rotation to the energy value at the first rotation. Meanwhile, the unconfined stability index (%) is the ratio of the flow energy measured in the direction of going up the cup if a blade mounted on the rheometer rotates at a constant speed in the cup containing the powder and moves up and down, which means the ratio of the energy value at the last rotation to the energy value at the first rotation.

### Evaluation Example 2. Evaluation of Positive Electrode Conductivity

The positive electrodes of Example 1 and Comparative Example 1 were punched into a size of 18 mm x 18 mm, and packaged with Al foil as positive electrode current collectors on both sides, and then subjected to electrochemical impedance analysis. When conducting electrochemical impedance analysis, an electrochemical cell is manufactured so that a positive electrode active material layer is placed between two positive electrode current collectors, and ionic conductivity and electron conductivity may be analyzed (Journal of power sources, 2016, 316, 215-223). For example, if a Nyquist plot is drawn with the impedance measured by applying an AC impedance of 10 megahertz (MHz) to 1 mHz frequency to the electrochemical cell, multiple curves similar to a semicircle shape may be drawn continuously, and for example, three large and small curves may be drawn continuously from a high-frequency region to a low-frequency region. By using the values of R1 and R2, which are resistance values obtained by fitting the low-frequency region to an equivalent circuit, electronic resistance RE = R1 + R2 and ionic resistance RI = (R1 + R2) * R1/R2 may be calculated. Each resistance may be converted to the conductivity of the electrode by considering the thickness and area of the electrode. In this case, the equivalent circuit may be a R1+Q2/R2 model (R: Resister, Q: Constant Phase Element).

As a result, as shown in Table 2 below, it was confirmed that the positive electrode of Example 1 had higher electrical conductivity and ionic conductivity than the positive electrode of Comparative Example 1.

**[Table 2]**

| Division | Electrical conductivity (S/cm) | Ionic conductivity (S/cm) |
|---|---|---|
| Example 1 | 6.6.E^{-0.5} | 5.5.E^{-0.5} |
| Comparative Example 1 | 4.1.E^{-0.5} | 3.2.E^{-0.5} |

(In this case, each of Example 1 and Comparative Example 1 was measured three times, and the average value was used as the result value in Table 2 above.)

### Evaluation Example 3. Evaluation of Positive Electrode Tensile Strength

The positive electrodes of Example 1 and Comparative Example 1 were punched according to the ASTM D638 mold to manufacture dog bone-shaped tensile specimens. The effective gauge length of the tensile specimens was 9.53 mm, and the effective width was 3.18 mm. The tensile specimens were mounted on a UTM device (LS1, Lloyd Instruments) and stretched at a rate of 5 millimeters per minute (mm/min) until the break point, and the tensile strength calculated after the break point was recorded.

As a result, as shown in Table 3 below, it was confirmed that the positive electrode of Example 1 showed a tensile strength that was about 9% higher than that of Comparative Example 1, even though it contained a smaller amount of a binder.

**[Table 3]**

| Division | Tensile strength (Mpa) |
|---|---|
| Example 1 | 0.136 |
| Comparative Example 1 | 0.125 |

### Example 2.

An all-solid-state battery was manufactured by sequentially stacking a negative electrode current collector (Cu foil), lithium metal, a sulfide-based solid electrolyte membrane composed of Li₆PS₅Cl, the positive electrode of Example 1 and a positive electrode current collector (Al foil). Here, each part of the positive electrode current collector and the negative electrode current collector was protruded out of a pouch so that the battery could maintain a vacuum, and the protrusions were used as positive and negative electrode terminals. In addition, the all-solid-state battery was subjected to a hydrostatic treatment at 500 MPa for 30 minutes. By performing this hydrostatic treatment, the characteristics as a battery are greatly improved.

### Comparative Example 2.

An all-solid-state battery was manufactured in the same manner as Example 2, except that the positive electrode of Comparative Example 1 was introduced as a positive electrode.

### Evaluation Example 3. Evaluation of Monocell Performance

The all-solid-state batteries (pouch-type monocells) of Example 2 and Comparative Example 2 were operated under the charge and discharge conditions below at an operating voltage range of 4.25 volts (V)-3.0 V and an operating temperature of 60°C, and discharge capacity retention at 0.33 coulombs (C), 0.5 C, and 1.0 C were evaluated compared to the discharge capacity at 0.1 C for the second time, and the results are shown in Table 4 below.

Charge conditions: 0.1 C, 4.25 V constant current (CC)/constant voltage (CV), 0.05 C cut-off

Discharge conditions: 0.1 C twice, 0.33 C, 0.5 C or 1.0 C, 3.0 V, CC

**[Table 4]**

| Division | | Example 2 | Comparative Example 2 |
|---|---|---|---|
| Discharge capacity retention (0.1 C charge, %) | 0.1 C | 100 | 100 |
| | 0.33 C | 98.8 | 98.8 |
| | 0.5 C | 97.2 | 97.3 |
| | 1.0 C | 91.5 | 90.6 |

As a result, it was confirmed that the discharge capacity retention of Example 2 was higher than that of Comparative Example 2 at a high C-rate. This seems to be because, in the case of Example 2, the binding between the positive electrode components was strong to secure an electron movement path and a lithium ion path, so that the discharge capacity decrease could be effectively controlled even at a high C-rate.

## Claims

1. A positive electrode comprising a positive electrode active material layer,
wherein the positive electrode active material layer comprises a positive electrode active material, a sulfide-based solid electrolyte, a conductive composite material and a fiberizing binder,
the conductive composite material comprises a core part comprising a carbon-based conductive material and a coating part positioned on at least a portion of the core part and comprising polymer nanoparticles, and
the polymer nanoparticles are a copolymer of polyvinylidene fluoride (PVDF) and a comonomer, where the comonomer is one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE).

2. The positive electrode according to claim 1, wherein the fiberizing binder is polytetrafluoroethylene (PTFE).

3. The positive electrode according to claim 1, comprising 1.2 parts by weight or less of the fiberizing binder based on 100 parts by weight of the positive electrode active material layer.

4. The positive electrode according to claim 1, wherein a weight ratio of the polymer nanoparticles to the conductive composite material is 5 to 50 percent by weight (wt%).

5. The positive electrode according to claim 1, wherein the polymer nanoparticles have a polymerization ratio between the polyvinylidene fluoride (PVDF) and the comonomer of 99:1 to 75:25.

6. The positive electrode according to claim 1, wherein the carbon-based conductive material is one or more selected from the group consisting of graphite, carbon black and carbon fiber.

7. The positive electrode according to claim 1, wherein a Brunauer, Emmett and Teller (BET) specific surface area of the carbon-based conductive material is 10 square meters per gram (m²/g) or less.

8. The positive electrode according to claim 1, wherein an average length of the carbon-based conductive material is 5 to 20 micrometers (µm).

9. The positive electrode according to claim 1, wherein the sulfide-based solid electrolyte is one or more selected from the group comprising Li₂S-P₂S₅-Li₂O, Li₂S-P₂S₅-Li₂O-LiI, Li₂S-LiBr-LiI-P₂S₅, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-Li₃PO₄, Li₂S-SiS₂-LiₚMO_{q} (p and q are positive numbers, and M is one among P, Si, Ge, B, Al, Ga and In), Li₂S-SiS₂-P₂S₃-LiI, Li₂S-P₂S₅, Li₂S-P₂S₅-LiX (X is a halogen element), Li₂S-B₂S₃, Li₂S-P₂S₅-ZₘSₙ (m and n are positive numbers, and Z is one of Ge, Zn or Ga), Lᵢ₂S-GeS₂, Li₇₋ₓPS₆₋ₓClₓ (0≤x≤2), Li₇₋ₓPS₆₋ₓBrₓ (0≤x≤2) and Li₇₋ₓPS₆₋ₓIₓ (0≤x≤2).

10. The positive electrode according to claim 1, wherein the positive electrode is a dry positive electrode.

11. An all-solid-state battery comprising a positive electrode, a solid electrolyte layer and a negative electrode,
wherein the positive electrode comprises a positive electrode active material layer,
the positive electrode active material layer comprises a positive electrode active material, a sulfide-based solid electrolyte, a conductive composite material and a fiberizing binder,
the conductive composite material comprises a core part comprising a carbon-based conductive material and a coating part positioned on at least a portion of the core part and comprising polymer nanoparticles, and
the polymer nanoparticles are a copolymer of polyvinylidene fluoride (PVDF) and a comonomer, where the comonomer is one or more selected from the group consisting of hexafluoropropylene (HFP), chlorotrifluoroethylene (CTFE), hexafluoroacetone (HFA), 1-hydropentafluoropropylene (HPFP), tetrafluoroethylene (TFE), and trifluoroethylene (TrFE).

12. The all-solid-state battery according to claim 11, wherein the solid electrolyte layer comprises one or more selected from the group comprising a sulfide-based solid electrolyte, an oxide-based solid electrolyte, and a halide-based solid electrolyte.
